# EUROPEAN PATENT APPLICATION

(11) **EP 4 303 044 A1**
(43) Date of publication of application: **10.01.2024**
(21) Application number: 22929219.8
(22) Date of filing: 31.10.2022
(51) Int. Cl.: B60H 1/00, B60L 58/27, B60L 58/26

(54) **INTEGRATED THERMAL MANAGEMENT APPARATUS AND SYSTEM**

(30) Priority: 29.04.2022 CN 202210474716
(71) Applicant: Voyah Automobile Technology Company Ltd., Hanyang District Wuhan City, Hubei 430050 (CN)
(72) Inventor: ZHENG, Fan, Wuhan, Hubei 430050 (CN); DENG, Xiang, Wuhan, Hubei 430050 (CN); JIN, Yongzhen, Wuhan, Hubei 430050 (CN); BU, Jianghua, Wuhan, Hubei 430050 (CN)
(74) Representative: Sach, Greg Robert
(86) International application number: PCT/CN2022/128801
(87) International publication number: WO 2023/207010

(57) **Abstract**

The present discloses an integrated thermal management device and system, belonging to the field of automotive thermal management, including: an integrated tank (1) for containing a medium, and the integrated tank (1) having a No. 1 water pump (11), a No. 2 water pump (12) and a No. 3 water pump (13) for pumping out, pumping in or pressurizing the medium; and a water-cooled heat exchanger (14), a water-cooled condenser (15), and a water-water heat exchanger (16), a five-way valve (2) and a six-way valve (3) mounted on a surface of the integrated tank (1); the water-cooled heat exchanger (14), the water-cooled condenser (15), and the water-water heat exchanger (16) being all connected to the five-way valve (2 ) and/or the six-port valve (3) via a pipeline. In this application, by adjusting an internal flow path of the six-way valve and the five-way valve, a thermal energy in the fields of an electric drive, a battery and a passenger compartment can be distributed reasonably, an unnecessary dissipation of the thermal energy is reduced, and an irreversible loss at a low-pressure side of a heat pump is reduced. Therefore an optimal overall energy consumption and a best experience are achieved.

## Description

### CROSS-REFERENCE TO RELATED APPLICATIONS

This application claims the priority of Chinese patent application No. 202210474716.X, filed on April 29, 2022 and entitled "INTEGRATED THERMAL MANAGEMENT DEVICE AND SYSTEM", the disclosure of which is hereby incorporated by reference in its entirety.

### TECHNICAL FIELD

The present disclosure relates to the technical field of thermal management of automobile, and in particular to an integrated thermal management device and system.

### BACKGROUND

At present, power batteries are used by electric automobiles as the power source for driving devices. With the continuous development of the electric automobiles, thermal management systems have gradually received attention.

At present, the mainstream thermal management system for a battery mainly includes two circulation loops: one circulation loop is a refrigeration circulation loop or a heating circulation loop including a compressor, an evaporator, a condenser or heater, a heat exchanger and other components; and another circulation loop is a cooling circulation loop including a water pump, a heat exchanger and a power battery box. In the circulation loops, a tank is usually connected through a bypass for compensating medium to the circulation loops, and the tank has a single function. Moreover, for the thermal management system for a power battery, the circulation loops need to be provided with an expansion tank in each working mode, resulting in disadvantages such as more spare parts, higher cost and so on. At the same time, there is a serious waste of thermal energy, since the functions of various portions are independent from one another. In addition, there are more and more modes in which the existing thermal management system are designed to operate, the structure of the existing thermal management system is more and more complex, and many apparatuses in the existing thermal management system need to occupy a considerable space, bringing out an adverse impact on the miniaturization of some electric vehicles in the future.

### SUMMARY

The present invention provides an integrated thermal management device and system, in which a thermal management can be conducted in an integrated manner, a thermal energy of different partitions can be rationally utilized, an energy consumption can be reduced, and unnecessary tanks, pipelines and management apparatuses can be left out, such that it has a simple structure, is cost-effective, and easy to be miniaturized.

In one aspect, the present invention provides an integrated thermal management device, including: an integrated tank for containing a medium, and equipped with a No. 1 water pump, a No. 2 water pump and a No. 3 water pump for pumping out, pumping in or pressurizing the medium; and thermal management components, comprising a water-cooled heat exchanger, a water-cooled condenser, a water-water heat exchanger, a five-way valve and a six-way valve mounted on a surface of the integrated tank; wherein, the water-cooled heat exchanger, the water-cooled condenser, and the water-water heat exchanger each are connected to the five-way valve and/or the six-way valve via a pipeline, and the thermal management components are connected to the integrated tank via the pipeline; the water-cooled heat exchanger is further connected with a liquid refrigerant in an air-conditioning system of vehicle via a pipeline; the water-cooled condenser is also connected with a gaseous refrigerant in the air-conditioning system of vehicle via a pipeline.

In another aspect, the present invention provides an integrated thermal management system mounted in a vehicle with a central controller, an automobile front radiator, a power battery, an electric motor, and a passenger compartment, in which the passenger compartment is provided with a warm air conditioner, including: the integrated thermal management device as described above; and a water heater, mounted in the vehicle;
the automobile front radiator, the power battery, the electric motor and the warm air conditioner are connected with the thermal management components via a pipeline;
the central controller is in signaling connection with the integrated thermal management device and adjusts, by regulating the thermal management components of the integrated thermal management device, a flow direction of a medium in the automobile front radiator, the power battery, the electric motor, the warm air conditioner and the thermal management components, to implement a thermal management control on the electric motor, the power battery and the passenger compartment.

The integrated thermal management device and system provided by this invention adopt an integrated architecture design, and by adjusting an internal flow path of the six-way valve and the five-way valve, the heat in the fields of an electric drive, a battery and a passenger compartment can be distributed reasonably, an unnecessary dissipation of the thermal energy is reduced, and an irreversible loss at a low-pressure side of a heat pump is reduced. Therefore an optimal overall energy consumption and a best experience are achieved. At the same time, in this application, a thermal management system is designed in a way of integration and modularization, so that thermal management modules can be packaged and adapted to different vehicle models; at the same time, the number of spare parts and the number of pipelines are reduced due to the integration, such that the cost of parts and assembly is reduced and the integration is controlled by a module part.

### BRIEF DESCRIPTION OF DRAWINGS

FIG. 1 shows a front view of an integrated thermal management device according to some embodiments of the present invention;
FIG. 2 is an exploded schematic diagram of the integrated thermal management device shown in FIG. 1 from an angle of isometric view;
FIG. 3 is a structural diagram of the integrated thermal management device as shown in FIG. 2 from a different angle of view;
FIG. 4 is a structural diagram of a five-way valve in the integrated thermal management device according to some embodiments of the present invention;
FIG. 5 is a structural diagram of a six-way valve in the integrated thermal management device according to some embodiments of the present invention;
FIG. 6 shows a schematic diagram of pipelines of an integrated thermal management system according to some embodiments of the present invention;
FIG. 7 is the schematic diagram of the pipelines in which a medium is circulated when a battery heating mode is activated in the integrated thermal management system shown in FIG. 6;
FIG. 8 is the schematic diagram of the pipelines in which a medium is circulated when a heat pump type of electrically driven waste heat recovery mode or a battery heating type of electrically driven waste heat recovery mode is activated in the integrated thermal management system shown in FIG. 6;
FIG. 9 is the schematic diagram of the pipelines in which a medium is circulated when an electrically driven cooling mode, a battery forced cooling mode, a battery uniform heating mode or a mode of heating the passenger compartment is activated in the integrated thermal management system shown in FIG. 6;
FIG. 10 is the schematic diagram of the pipelines in which a medium is circulated when a battery natural cooling mode is activated in the integrated thermal management system shown in FIG. 6;
FIG. 11 is the schematic diagram of the pipelines in which a medium is circulated when a filling and exhausting mode is activated in the integrated thermal management system shown in FIG. 6; and
FIG. 12 is the schematic diagram of the pipelines in which a medium is circulated when a mode of defogging combined with battery heating the passenger compartment is activated in the integrated thermal management system shown in FIG. 6.

### DESCRIPTION OF EMBODIMENTS

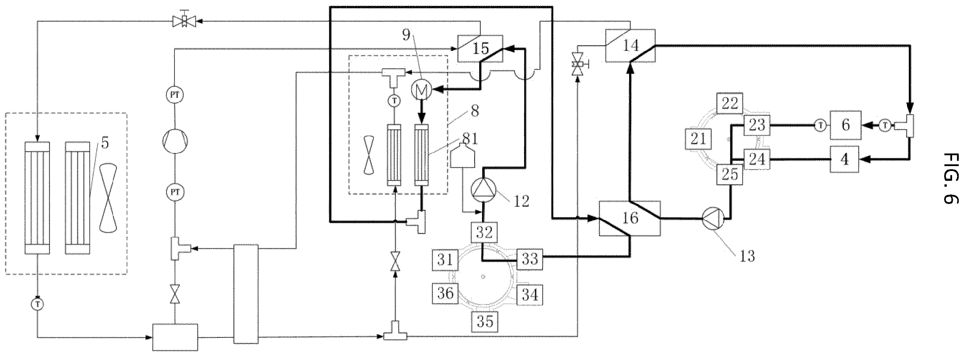

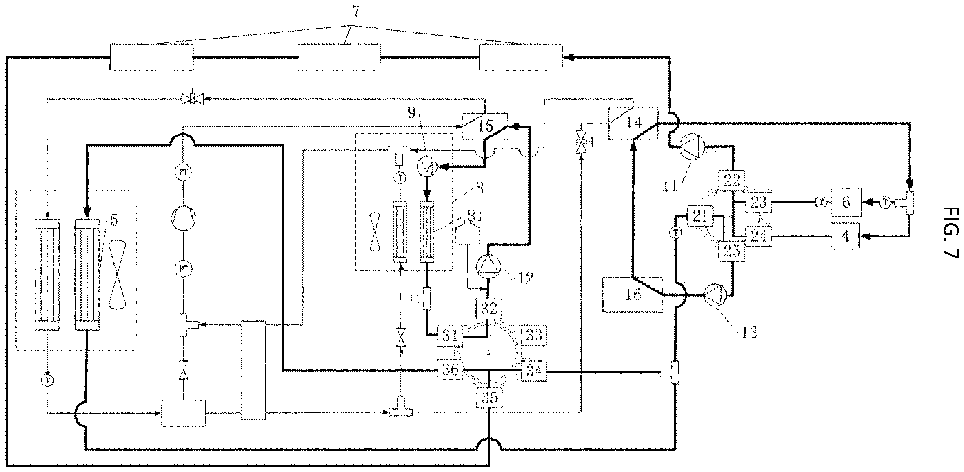

The present invention provides an integrated thermal management device, which includes an integrated tank 1, thermal management components and a water-cooled heat exchanger 14. In some embodiments and subsequent embodiments of the present invention, water is used as the medium, and those skilled in the art can also select other suitable mediums according to situations. In some embodiments and subsequent embodiments of the present invention, as shown in FIG. 6 to FIG. 12, in the accompanying drawings which are represented through pipeline diagrams, heavy solid lines indicate the pipelines through which the medium may flow, and fine solid lines indicate other pipelines related to the present invention. The arrows only indicate a flow direction of the medium in one situation, and does not indicate that the medium must flow in the direction indicated by the arrows. In FIG. 7 to FIG. 12, the pipelines, within which a medium is not circulated in the corresponding situations, are hidden.

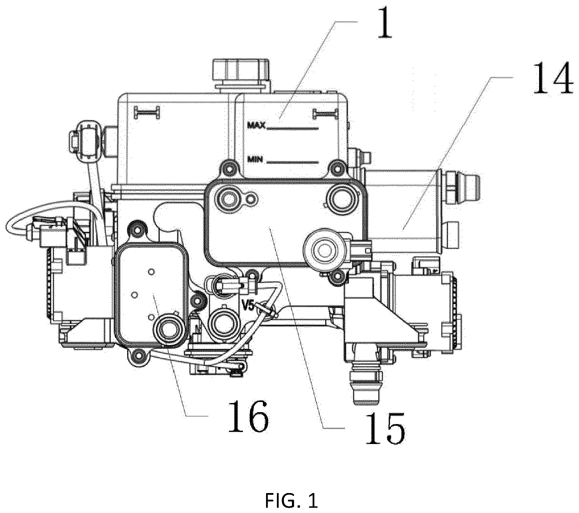

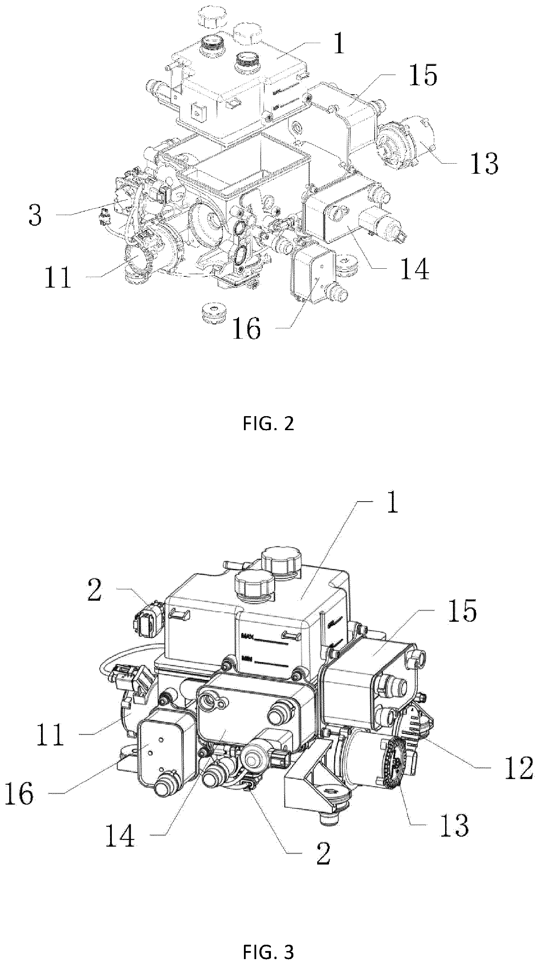

In some embodiments, the integrated tank 1 is a place for storing medium, and the medium may be other types of safe liquids besides water. In some embodiments, as shown in FIG. 1, FIG. 2 and FIG. 3, the integrated tank 1 is divided into an upper portion and a lower portion. The overall structure of the lower portion is relatively strong and is configured to carry other components and connect other components, while the upper portion is relatively light. The upper portion and the lower portion are detachably connected to each other, so that the upper portion can be opened conveniently to clean the integrated tank 1 when necessary. There are also provided with three water pumps, which are a No. 1 water pump 11, a No. 2 water pump 12 and a No. 3 water pump 13, at the external periphery of the integrated tank 1. The three water pumps are configured to pump out the medium in the integrated tank and pressurize a water flow within a circulation loop when a part of the circulation loop is composed of the water pumps.

The thermal management component is a main portion of a heat exchange for the medium, and the thermal management component is also a component that adjusts a flow direction of the medium. The portions for heat exchange include a water-cooled heat exchanger 14, a water-cooled condenser 15 and a water-water heat exchanger 16, and the portion for adjusting the flow direction includes a six-way valve 3 and a five-way valve 2.

One of the pipelines of the water-cooled heat exchanger 14 is configured to receive a liquid refrigerant in an air-conditioning system of vehicle to cool the medium in another pipeline. The liquid refrigerant, after vaporized, is mixed with a gas refrigerant generated after being cooled by an air conditioner within a passenger compartment 8, and enters into the water-cooled condenser 15 for exchanging the thermal energy, and then returns to an automobile front radiator 5 for becoming into a liquid by forced cooling.

The five-way valve 2 and the six-way valve 3 are devices for controlling the flow direction of the medium, and the pipelines can be switched by turning the five-way valve 2 and the six-way valve 3.

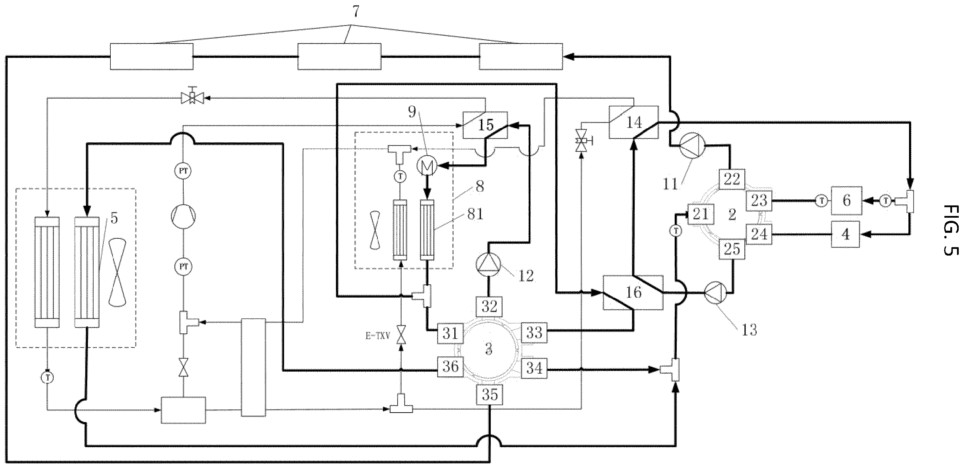

In some embodiments, the above six-way valve 3 includes: a six-way housing 37, the six-way housing 37 being evenly provided with six valve ports along a circumferential direction for connecting the pipelines, the valve ports being connected to various pipelines. A six-way core body 38 is arranged inside the six-way housing 37. As shown in FIG. 5, there are two flow grooves 39 within the six-way core body 38, and the flow grooves 39 can communicate three valve ports with one another at most under certain circumstances. For example, the lower flow groove 39 in FIG. 5 can cause three lower valve ports to be in commutation with one another. When the six-way core body 38 is turned so that the upper flow groove 39 is close to the upper right corner as shown in FIG. 5, two valve ports, i.e. the upper valve port and upper right valve port, are caused to be in communication with one another. For the convenience of description, the six valve ports of the six-way valve 3 are respectively named as a No.1 valve port 31, a No.2 valve port 32, a No.3 valve port 33, a No.4 valve port 34, a No.5 valve port 35 and a No.6 valve port 36. The positions, at which the six valve ports of the six-way valve 3 are connected to a valve body, are evenly distributed along the circumferential direction, therefore any valve port facing upwards can be named as the No.2 valve port 32 and the function of the six-way valve 3will not be affected. In some embodiments and subsequent embodiments of the present invention, a valve port facing upper left is named as the No.1 valve port 31, and other valve ports are named in turn as the No.2 valve port 32, the No.3 valve port 33, the No.4 valve port 34, the No.5 valve port 35 and the No.6 valve port 36 along a clockwise direction according to the direction shown in FIG. 5.

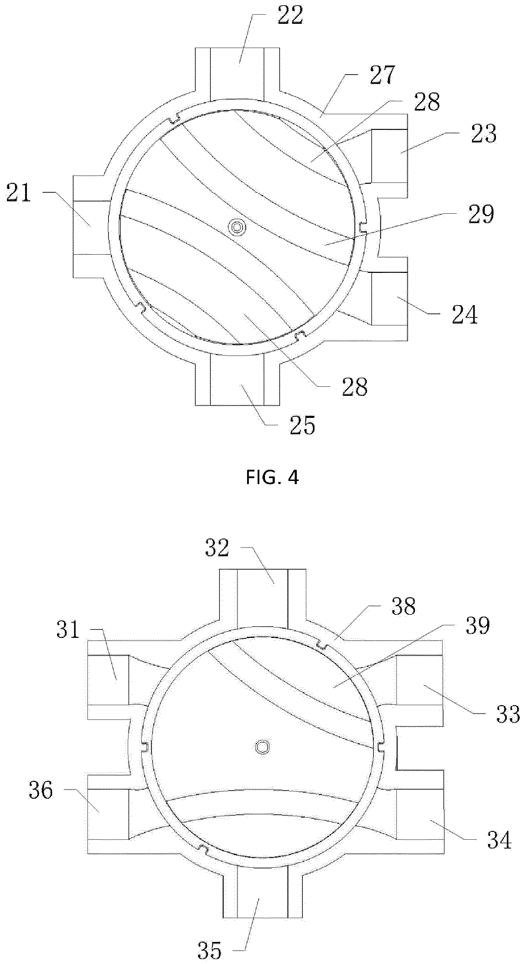

In some embodiments, the structure of the above five-way valve 2 is not centrally symmetrical, thus the five-way valve 2 will be mounted along a specific mounting direction, and a mounting position of a specific valve port cannot be changed arbitrarily. In FIG. 4, a valve port close to the left is a first valve port 21, and then other valve ports are named in turn as a second valve port 22, a third valve port 23, a fourth valve port 24 and a fifth valve port 25 along the clockwise direction. With a line connecting the second valve port 22 and the fifth valve port 25 as a boundary, the valve body on the left side is divided into two equal portions at a position where the first valve port 21 is located, and the valve body on the right side is divided into three equal portions at positions where the third valve port 23 and the fourth valve port 24 are located. As shown in FIG. 4, the second valve port 22 is in communication with the third valve port 23 through a first communication groove 28. In some embodiments, the first communication groove 28 mainly communicates two adjacent valve ports, and the second communication groove 29 mainly communicates two valve ports which are spaced apart by another valve port on the right portion of the valve body. When the five-way core body 27 of the five-way valve 2 is turned to be at a specific angle, the first communication groove 28 and a second communication groove 29 can communicate the second valve port 22 to the third valve port 23 and the fourth valve port 24 at the same time, or communicate the fifth valve port 25 to the third valve port 23 and the fourth valve port 24 at the same time.

The present invention also provides an integrated thermal management system, which is mainly applied in automobiles. When the present invention is implemented, the vehicle is required to have at least the following components: a central controller 4, an automobile front radiator 5, a power battery 6, an electric motor 7 and a passenger compartment 8, while the passenger compartment 8 should also have a hot air conditioner.

The central controller 4 generally refers to a driving computer of the automobile, which mainly plays the role of judgment and control. The driver generally controls the integrated thermal management system according to the present invention through the central controller 4 to issue instructions in order to achieve a specific thermal management mode.

The automobile front radiator 5 is mainly mounted on a head of the automobile. The automobile front radiator 5 takes advantage of a violent air flow generated by the head of the automobile during travelling to exchange heat forcibly. A heat exchange efficiency is high. At the same time, a gaseous refrigerant in an air-conditioning system of vehicle is liquefied. In the present invention, a liquid refrigerant pipeline, in which a liquid refrigerant cooled and obtained in the automobile front radiator 5 is accommodated, is divided into two liquid refrigerant pipelines through a three-way valve, one of the two liquid refrigerant pipelines being communicated to the water-cooled heat exchanger 14, another liquid refrigerant pipeline being communicated to an evaporating core body of the passenger compartment 8. The liquid refrigerant is evaporated in the evaporating core body to cool the passenger compartment 8. Both the water-cooled heat exchanger 14 and the evaporating core body exhaust the gaseous refrigerant. Two paths of gaseous refrigerants are aggregated through a three-way valve, and flow to the water-cooled condenser 15 in order to transfer the thermal energy to a medium circulation loop, and then flow back into the automobile front radiator 5 to be cooled into a liquid state, and such cycle repeats in this way. As shown in FIG. 6, in the present invention, the medium circulation loop and a position at which the above refrigerant is cooled are in different positions of the automobile front radiator 5, and the medium circulation loop and the cooling of refrigerant do not affect each other.

The power battery 6 is a device on which an electric power is stored in vehicles, and the electric motor 7 is a device by which an electric energy is consumed. Both the power battery 6 and the electric motor 7 can generate relatively large thermal energy, and a part of the heat can be transferred to heat other portions of the vehicle through the present invention, such that a heat dissipation effect of the power battery 6 is achieved and an overall energy consumption is reduced. The passenger compartment 8 is a position at which passengers and a driver are located. Generally, the temperature in the passenger compartment 8 needs to be regulated to a relatively comfortable temperature. When the weather is cold, the passenger compartment 8 needs to be heated, and the thermal energy from other heat-generating devices of the vehicle can be transferred to heat the passenger compartment 8. When the weather is hot, refrigeration apparatuses can be used to cool the passenger compartment 8 together with other components to be cooled in order to improve a heat exchange efficiency. A warm air conditioner 81 is a heat exchange component which generally exchanges heat between a medium in a pipeline and the passenger compartment 8. When a temperature of the medium is relatively high, the temperature of the medium is reduced and a hot air is blown to the passenger compartment 8.

The present invention may further includes the aforementioned integrated thermal management device, and a water heater 9. The automobile front radiator 5, the power battery 6, the electric motor 7 and the warm air conditioner 81 above-mentioned are connected with the thermal management components via the pipeline. The central controller 4 is in signaling connection with the integrated thermal management device, and adjusts the flow direction of the medium in the automobile front radiator 5, the power battery 6, the electric motor 7, the warm air conditioner 81 and the thermal management components by regulating the thermal management components of the integrated thermal management device, to implement a thermal management control on the electric motor 7, the power battery 6 and the passenger compartment 8. In some embodiments, the central controller 4 mainly control a communication relationship inside the five-way valve 2 and the six-way valve 3 to guide the medium to different pipelines. At the same time, the central controller 4 may further control an activation and a de-activation of the No. 1 water pump 11, the No. 2 water pump 12, the No. 3 water pump 13, the automobile front radiator 5, the power battery 6, the electric motor 7 and the warm air conditioner 81 to achieve different thermal management modes.

In some embodiments, as shown in FIG. 6, a connection status of the pipelines of the integrated thermal management system is described as below.

The five-way valve 2 is provided with a first valve port 21, a second valve port 22, a third valve port 23, a fourth valve port 24 and a fifth valve port 25 thereon.

The six-way valve 3 is provided with a No.1 valve port 31, a No.2 valve port 32, a No.3 valve port 33, a No.4 valve port 34, a No.5 valve port 35 and a No.6 valve port 36 thereon.

In the situation that all valves in the pipelines are open by default, the pipeline protruding from the No.1 valve port 31 is divided into two paths through one three-way valve, one of the two paths flowing through the water-water heat exchanger 16 and then back to the No.3 valve port 33, another one of the two paths passing through the warm air conditioner 81, the water heater 9, the water-cooled condenser 15, and the No. 2 water pump 12 for the integrated tank 1 in sequence to reach the No.2 valve port 32. That is, the pipelines corresponding to the No.1 valve port 31, the No.2 valve port 32 and the No.3 valve port 33 are in communication with one another through one three-way valve. In some embodiments, the function of the No.1 valve port 31 is mainly to recycle the medium into the six-way valve 3, and the function of the No.2 valve port 32 is mainly to send the medium to the water-water heat exchanger 16 for heat exchange, so as to utilize the thermal energy of the battery. A function of the No.3 valve port 33 is mainly to send the medium to a heater or the warm air conditioner 81 for utilizing a waste heat in the medium to heat the passenger compartment 8, or the medium also can be heated by the water heater 9 to supply to other parts for use.

The pipeline protruding from the No.4 valve port 34 is divided into two paths through one three-way valve, one of the two paths leading to the first valve port 21, another one of the two paths passing through the automobile front radiator 5 and then leading to the No.6 valve port 36. In some embodiments, the pipeline corresponding to the No.4 valve port, the pipeline corresponding to the No.6 valve port 36 and the pipeline corresponding to the first valve port 21 are in communication with one another through one three-way valve. The pipeline corresponding to the No.4 valve port 34 is to send the medium in the six-way valve 3 directly to the five-way valve 2. The pipeline corresponding to No.6 valve port 36 is to send the medium into the automobile front radiator, and the medium, after being forced cooled to a lower temperature within the automobile front radiator, is sent to the five-way valve 2. The pipeline corresponding to the first valve port 21 is configured to receive the medium from the six-way valve 3.

The pipeline protruding from the No.5 valve port 35 passes through the electric motor 7, the No. 1 water pump 11 in sequence, and then leads to the second valve port 22. In some embodiments and subsequent embodiments of the present invention, the electric motor 7 is collectively referred to as the electric motors on the vehicle, a control apparatus attached to the electric motor, and a power conversion apparatus attached to the electric motor, for example a front electric motor and a rear electric motor used in commercial vehicles, as well as DC/DC (DC-DC converter), OBC (On Board Charger), PDU (Power Distribution Unit) on general vehicles. The cooled water is sent out through the second valve port 22 of the five-way valve 2 and is sent back into the six-way valve 3 after passing through the electric motor 7, and then is distributed by the six-way valve 3 to a mechanism which performs a cooling function.

The pipeline protruding from the fifth valve port 25 passes through the No. 3 water pump 13 and the water-water heat exchanger 16 in sequence, and then passes through one three-way valve to be divided into two paths. One of the two paths is connected to the third valve port 23 after passing through the power battery 6, and another one of the two paths is connected to the fourth valve port 24 after passing through the central controller 4. In some embodiments, the pipeline corresponding to the fifth valve port 25, the pipeline corresponding to the third valve port 23 and the pipeline corresponding to the fourth valve port 24 are in communication with one another through one three-way valve to form a circulation loop. The pipeline corresponding to the fifth valve port 25 is generally configured to draw water from the integrated tank 1 and exchange the thermal energy from the water-water heat exchanger 16, and then control the temperature of the power battery 6 and the temperature of the central controller 4. The pipeline corresponding to the third valve port 23 is to control the temperature of the power battery 6. The pipeline corresponding to the fourth valve port 24 is to control the temperature of the central controller 4. The specific distribution of cooling efficiency can be achieved by distributing a water volume through the three-way valve.

The integrated thermal management system realizes one or more of a battery heating mode, a heat pump type of electrically driven waste heat recovery mode, a battery heating type of electrically driven waste heat recovery mode, an electrically driven cooling mode, a battery forced cooling mode, a battery uniform heating mode, a mode of heating the passenger compartment 8, a battery natural cooling mode, a filling and exhausting mode, and a mode of defogging combined with battery heating the passenger compartment 8, by regulating an opening and/or a closing of various valve ports inside the five-way valve 2 and six-way valve 3 to form different medium circulation loops, and by controlling the water-cooled heat exchanger 14, the water-cooled condenser 15, the water-water heat exchanger 16, the warm air conditioner 81, the automobile front radiator 5 and the water heater 9.

In some embodiments, it is necessary to activate the battery heating mode to maintain a battery temperature in cold weather, in order to prevent the battery from failing to be activated, the pipeline under such condition as shown in FIG. 7. In this condition, the central controller 4 may control an activation of the water heater 9, the No. 2 water pump 12 and the No. 3 water pump 13.

Meanwhile, in the six-way valve 3, the No.5 valve port 35 is in communication with the No.4 valve port 34, and the No.3 valve port 33 is in communication with the No.2 valve port 32. In the five-way valve 2, the third valve port 23, the fourth valve port 24 and the fifth valve port 25 are in communication with one another, and the first valve port 21 is in communication with the second valve port 22. In some embodiments, at this time, the No. 3 water pump 13 provides power and supplements the water volume for a circulation loop controlled by the five-way valve 2. For the whole circulation loop, the water is pumped from the No. 3 water pump 13, and is heated by the water-water heat exchanger 16, and then passes through the three-way valve, which is utilized to distribute the water volume of the water. The specific distribution of the water volume is determined according to the temperature of the central controller 4 and the temperature of the power battery 6. The heated water after heating the power battery 6 and the central controller 4 passes through the No. 3 water pump 13 and continues to be pumped to the water-water heat exchanger 16 for circulating. On another side, the water is pumped out by the No. 2 water pump 12, and the water is sent to the water-cooled condenser 15. At this time, a valve of another path of the water-cooled condenser 15 is closed, thus the water is not cooled here, and then the water is heated by the water heater 9 and then is sent to the water-water heat exchanger 16 after passing through the warm air conditioner 81 to heat the cold water of another circulation loop, finally returns to the No.3 valve port 33 and then to the No.2 valve port 32, and then returns to the No. 2 water pump 12. In some embodiments, the warm air conditioner 81 is not activated, thus the passenger compartment 8 is not heated.

In the present invention, a circulation loop is further formed due to the structures of the six-way core body 38 and the five-way core body 27, and the circulation loop starts from the second valve port 22, passes through the No. 1 water pump 11 and the electric motor 7, then returns to the No.5 valve port 35, and leads to the No.4 valve port 34 from the inside of the six-way valve 3, and then leads from the pipeline corresponding to the No.4 valve port 34 to the first valve port 21 of the five-way valve 2, and then is in communication with the second valve port 22 in the five-way valve 2 to form a complete circulation loop. However, no medium is circulated within this circulation loop at this time as the No. 1 water pump 11 is not turned on, thus this circulation loop is not shown in the accompanying drawings.

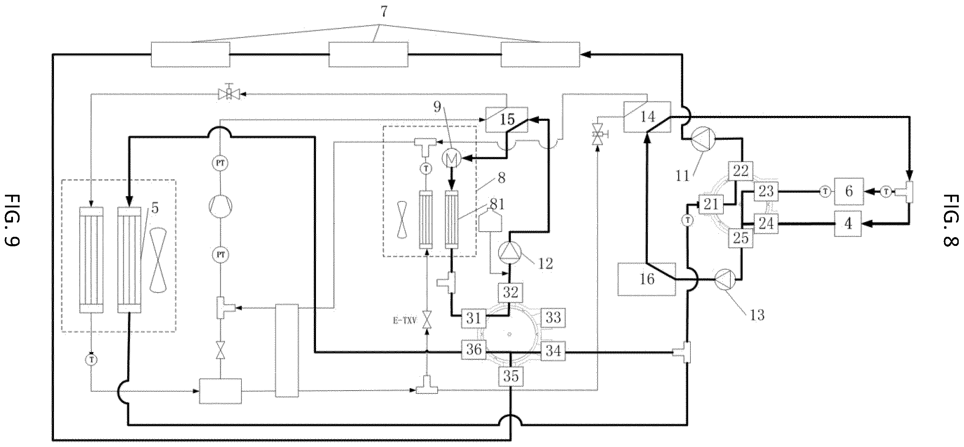

In some embodiments, when it is necessary to activate the heat pump type of electrically driven waste heat recovery mode or the battery heating type of electrically driven waste heat recovery mode or a battery dual cooling mode, the above medium circulation loop is shown in FIG. 8, and is described as below.

In the six-way valve 3, the No.5 valve port 35 leads to the No.4 valve port 34 and the No.6 valve port 36, and the No.1 valve port 31 leads to the No.2 valve port 32. In the five-way valve 2, the first valve port 21 is in communication with the fifth valve port 25, and the third valve port 23 and the fourth valve port 24 are in communication with the second valve port 22.

In some embodiments, the pipeline starts from the No. 1 water pump 11, i.e. the medium starts from the No. 1 water pump 11, enters the five-way valve 2 through the second valve port 22, and flows out of the five-way valve 2 from the third valve port 23 and fourth valve port 24, and then cools the power battery 6 and the central controller 4 respectively, and then the medium cooling the power battery 6 and the medium cooling the central controller 4 converge on through one three-way valve. After this, the medium passes through the automobile front radiator, and then passes through the No. 3 water pump 13 to enter the five-way valve 2 from the fifth valve port 25, and then flows out from the first valve port 21 and then is divided into two paths by one three-way valve. One of the two paths enters the six-way valve 3 through the No.4 valve port 34, and another one of the two paths passes through the automobile front radiator 5 and then enters the six-way valve 3 from the No.6 valve port 36, and then these two paths of medium, after converging on the fifth six-way valve 3, flow out of the No.5 valve port 35, pass through the electric motor 7 and then back to No. 1 water pump 11 to form a circulation loop.

When the battery heating type of electrically driven waste heat recovery mode is activated, the No. 1 water pump 11, the No. 3 water pump 13 and the automobile front radiator 5 are activated. The medium exists only in the above circulation loop, and the thermal energy of the electric motor 7 after circulation is used to heat the battery and the central controller 4 to achieve the recycle of the thermal energy of the electric motor 7, and then the temperature of the medium is reduced through the automobile front radiator 5 such that the electric motor 7 is cooled again. At this time, the liquid refrigerant is not produced by the automobile front radiator 5, and the water-cooled heat exchanger 14 and the water-cooled condenser 15 are not activated.

When the battery dual cooling mode is activated, the No. 1 water pump 11, the No. 3 water pump 13 and the automobile front radiator 5 are activated, and the medium only exists in the above circulation loop. At the same time, the automobile front radiator 5 cools the medium to generate a liquid refrigerant, and then the water-cooled heat exchanger 14 is activated. The medium, which has been cooled once by the automobile front radiator 5 in the above circulation loop, is cooled again by the water-cooled heat exchanger 14, so that the temperature of the medium is further reduced, thereby more effectively controlling the temperature of the battery.

Another circulation loop starts from the No.2 valve port 32, i.e. the medium starts from the No.2 valve port 32, passes through the No. 2 water pump 12 to be pressurized and supplemented with water, and then flows through the water-cooled condenser 15, and then passes through the water heater 9 and the warm air conditioner 81, and finally returns, from the No.1 valve port 31, back into the six-way valve 3, thereby forming one circulation loop. The No. 2 water pump 12 in this circulation loop is turned on only in a heat pump type of electrically driven waste heat recovery mode, thus there is a circulated medium. No medium is circulated when the battery heating type of electrically driven waste heat recovery mode is in operation. At the same time the air-conditioning system of vehicle is activated. The automobile front radiator 5 is utilized to cool the refrigerant into a liquid refrigerant and the liquid refrigerant is sent to the water-cooled heat exchanger 14. The heated water flowing out of the power battery 6 and the central controller 4 is thermal energy-exchanged with the liquid refrigerant in the water-cooled heat exchanger 14, to vaporize the liquid refrigerant. The vaporized refrigerant enters the water-cooled condenser 15, and transfers the thermal energy to the medium flowing out of the No. 2 water pump 12 in order to heat the medium. The medium with a higher temperature transmits the thermal energy into the passenger compartment 8 through the warm air conditioner 81, such that the waste thermal energy of the electric motor 7 is effectively utilized. At the same time, in some embodiments, the water heater 9 may further be turned on to regulate the medium to a comfortable temperature.

In some embodiments, when one of the electrically driven cooling modes, the battery forced cooling mode, the battery uniform heating mode and the mode of heating the passenger compartment 8 is activated, the medium circulation loop is as shown in FIG. 9, and is described as below.

In the six-way valve 3, the No.4 valve port 34, the No.6 valve port 36 and the No.5 valve port 35 are in communication with one another, and the No.1 valve port 31 is in communication with the No.2 valve port 32.

In the five-way valve 2: the third valve port 23, the fourth valve port 24 and the fifth valve port 25 are in communication with one another, and the first valve port 21 is in communication with the second valve port 22.

In some embodiments, the circulation loop in which a medium is circulated may be divided into three circulation loops, referred to as a first circulation loop, a second circulation loop and a third circulation loop, respectively.

In some embodiments, the first circulation loop starts from the fifth valve port 25, i.e. the medium starts from the fifth valve port 25, passes through the No. 3 water pump 13 to be pressurized and supplemented with water, and then flows through the water-water heat exchanger 16 and the water-cooled heat exchanger 14, and then is divided into two paths through one three-way valve. The two paths of medium flow through the power battery 6 and the central controller 4 respectively, and finally converge on the fifth valve port 25 from the third valve port 23 and the fourth valve port 24 respectively, thereby forming one circulation loop. No medium is circulated in another heat exchange pipeline of the water-water heat exchanger 16 in this circulation loop, and this is equivalent to no heat exchange.

The second circulation loop starts from the second valve port 22, i.e. the medium starts from the second valve port 22, passes through the No. 1 water pump 11 to be pressurized and supplemented with water, then flows through the electric motor 7, and enters the six-way valve 3 from the No.5 valve port 35, and then is equally distributed to the No.6 valve port 36 and the No.4 valve port 34. After this, the pipeline corresponding to No.6 valve port 36 and the pipeline corresponding to No.4 valve port 34 converge on the first valve port 21 through one three-way valve, and the converged mediums return to the second valve port 22 inside the five-way valve 2.

The third circulation loop starts from the No.2 valve port 32, i.e. the medium starts from the No.2 valve port 32, passes through the No. 2 water pump 12 to be pressurized and supplemented with water, then passes through the water-cooled condenser 15, the water heater 9 and the warm air conditioner 81 in sequence, and then returns to the six-way valve 3 from the No.1 valve port 31, and then returns to the No.2 valve port 32 inside the six-way valve 3.

When it is necessary to activate the electrically driven cooling mode, only the No. 1 water pump 11 and the automobile front radiator 5 are activated. At this time, the medium is circulated only in the second circulation loop for forced cooling the thermal energy in the electric motor 7 by the automobile front radiator 5.

When it is necessary to activate the battery forced cooling mode, the No. 3 water pump 13 is activated so that the medium is circulated in the first circulation loop. At the same time, the automobile front radiator 5 is activated, and the automobile front radiator 5 provides the liquid refrigerant to activate the water-cooled heat exchanger 14. After the medium passes through the water-cooled heat exchanger 14 in the first circulation loop, the liquid refrigerant is vaporized to quickly cool the medium to a lower temperature, so that the cooling efficiency of the battery is greatly improved, while the gaseous refrigerant flows back to the automobile front radiator 5 to be re-cooled into the liquid for circulating.

When it is necessary to activate the battery uniform heating mode, the No. 3 water pump 13 and the No. 2 water pump 12 are activated, so that a medium is circulated in both the first circulation loop and the third circulation loop, and then the automobile front radiator 5 is activated to lead the liquid refrigerant to the water-cooled heat exchanger 14, so that the water-cooled heat exchanger 14 is activated to cool the medium in the first circulation loop. The cooled gaseous refrigerant flows to the water-cooled condenser 15 to heat the medium in the third circulation loop. The medium in the third circulation loop is heated up, and the heated medium heats the passenger compartment 8 through the warm air conditioner 81 in the third circulation loop, so that a uniform heat effect is achieved by utilizing the waste thermal energy of the battery.

When it is necessary to activate the mode of heating the passenger compartment 8, the No. 2 water pump 12 is activated, and at this time a medium is circulated only in the third circulation loop, and the water heater 9 is activated to heat the medium to a suitable temperature, and then the thermal energy is sent to the passenger compartment 8 through the warm air conditioner 81.

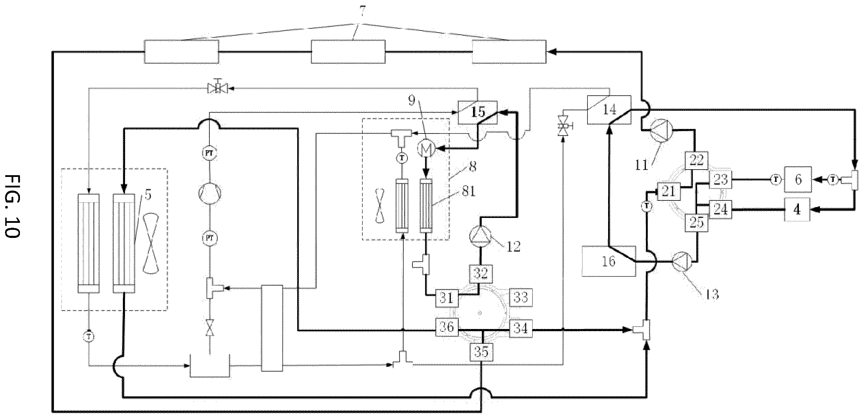

In some embodiments, when the battery natural cooling mode is activated, the pipeline diagram in this condition is shown in FIG. 10. In the six-way valve 3, the No.4 valve port 34, the No.6 valve port 36 and the No.5 valve port 35 are in communication with one another, and the No.1 valve port 31 is in communication with the No.2 valve port 32. In the five-way valve 2, the third valve port 23, the fourth valve port 24 and the fifth valve port 25 are in communication with one another.

In some embodiments, in the circulation loop that plays the main role of cooling the battery, the water starts from the No. 3 water pump 13, passes through the water-water heat exchanger 16 and the water-cooled condenser 15, and then is sent to the power battery 6 and the central controller 4 through one three-way valve. The heated water is sent back into the five-way valve 2 by passing through the third valve port 23 and the fourth valve port 24, and then flows out from the fifth valve port 25, and then is sent back to the integrated tank 1 from the No. 3 water pump 13. A natural heat dissipation of entire circulation loop is utilized to cool the battery. At the same time, the No. 2 water pump 12 and the No. 1 water pump 11 may also be turned on simultaneously to extract hotter water from the integrated tank 1 to circulate and dissipate heat in respective corresponding pipelines, and finally the cooled water is sent back to the integrated tank 1.

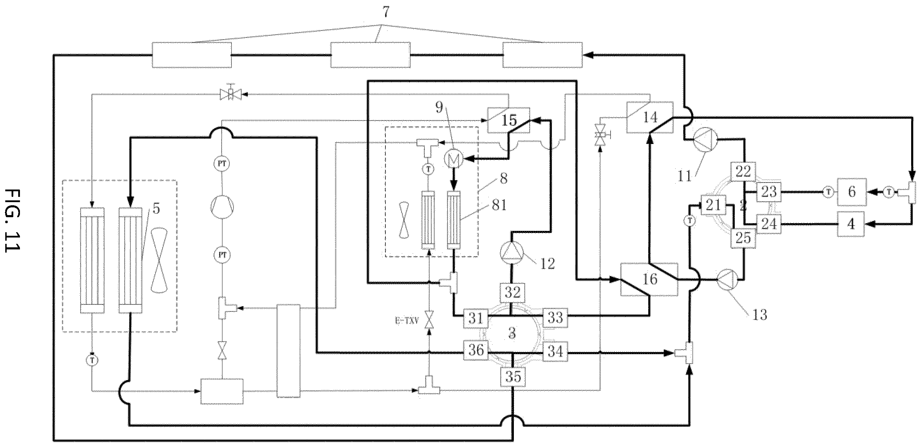

In some embodiments, after a large number of cycles, bubbles containing non-condensing gas will be accumulated in the pipeline, thus it is necessary to communicate as many pipelines as possible to circulate, and finally the bubbles containing non-condensing gas are caused to be sent into the integrated tank 1, and then the integrated tank 1 is opened to remove the non-condensing gas. At this time, the medium circulation loop is shown in FIG. 11, and is described as below.

In the six-way valve 3, the No.4 valve port 34, the No.5 valve port 35 and the No.6 valve port 36 are in communication with one another, and the No.3 valve port 33 is in communication with the No.2 valve port 32.

In the five-way valve 2, the second valve port 22, the third valve port 23 and the fourth valve port 24 are in communication with one another, and the first valve port 21 is in communication with the fifth valve port 25.

Moreover, the No. 1 water pump 11, the No. 2 water pump 12 and the No. 3 water pump 13 are activated and two circulation loops are formed at this time.

In one of the two circulation loops, the pipeline starts from the No. 1 water pump 11, i.e. the medium starts from the No. 1 water pump 11, flows through the electric motor 7 to the No.5 valve port 35 of the six-way valve 3, and then is divided into two paths in the six-way valve 3. One of the two paths flows out from the No.4 valve port 34, and another one of the two paths flows out from the No.6 valve port 36. The pipeline corresponding to the No.4 valve port 34 and the pipeline corresponding to the No.6 valve port 36 are converged through one three-way valve, and the mediums within the converged pipelines are sent to the first valve port 21 of the five-way valve 2, flows out from the fifth valve port 25 of the five-way valve 2, passes through the No. 3 water pump 13, and then flows through the water-water heat exchanger 16 and the water-cooled heat exchanger 14, and then is divided into two paths by one three-way valve. One of the two paths flows through the power battery 6, and another one of the two paths flows through the central controller 4, and then the two paths flow into the five-way valve 2 from the third valve port 23 and the fourth valve port 24 respectively, and finally flows out from the second valve port 22 of the five-way valve 2, returning to the No. 1 water pump 11, thereby forming a circulation loop.

Another circulation loop starts from the No. 2 water pump 12, i.e. the medium starts from the No. 2 water pump 12, passes through the water-cooled condenser 15, the water heater 9 and the warm air conditioner 81 and then is divided into two paths, one path flowing through the water-water heat exchanger 16 and then returns to the six-way valve 3 from the No.3 valve port 33 of the six-way valve 3, another path returning to the six-way valve 3 from the No.1 valve port 31, finally flowing out from the No.2 valve port 32 and returning to the No. 2 water pump 12 to form another circulation loop.

After the two circulation loops continue to operate for a period of time, the bubbles containing non-condensing gas can be taken out of the pipelines and finally can be aggregated into the integrated tank 1.

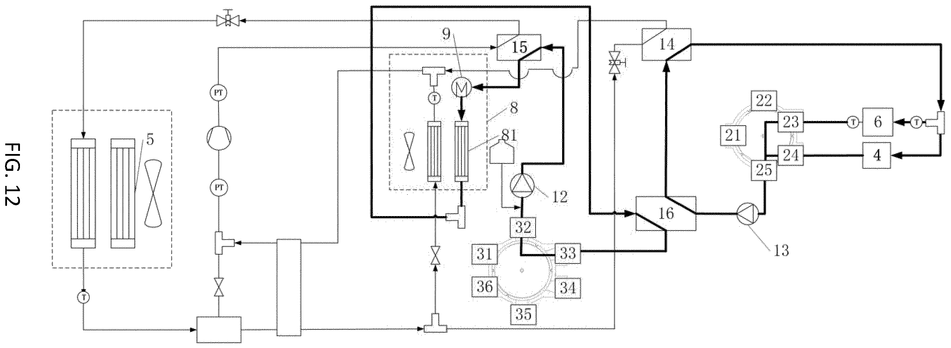

In some embodiments, when it is necessary to activate the mode of defogging combined with battery heating the passenger compartment 8, the pipeline diagram in this condition is shown in FIG. 12, and the medium circulation loop is described as below.

In the six-way valve 3, the No.4 valve port 34, the No.5 valve port 35 and the No.6 valve port 36 are in communication with one another, and the No.3 valve port 33 is in communication with the No.2 valve port 32.

In the five-way valve 2: the third valve port 23, the fourth valve port 24 and the fifth valve port 25 are in communication with one another, and the first valve port 21 is in communication with the second valve port 22.

There are two circulation loops in this invention, in one of the two circulation loops, the medium starts from the No. 2 water pump 12, flows through the water-cooled condenser 15, the water heater 9, the warm air conditioner 81, then passes through the three-way valve, and then flows through the water-water heat exchanger 16, and flows back to the six-way valve 3 from the No.3 valve port 33 of the six-way valve 3, and then flows out from the No.2 valve port 32, and returns to the No. 2 water pump 12, thereby forming one circulation loop. This circulation loop is only referred as the first circulation loop in this invention.

In another circulation loop, the medium starts from the No. 3 water pump 13, i.e. the medium starts from the No. 3 water pump 13, flows through the water-water heat exchanger 16 and the water-cooling heat exchanger 14, then the pipeline is divided into two paths by one three-way valve. One path of the two paths flows to the power battery 6, and another path of the two paths flows to the central controller 4, and then the two paths flow from the third valve port 23 and the fourth valve port 24 to the five-way valve 2 respectively, and finally flow out from the fifth valve port 25 of the five-way valve 2, and return to the No. 3 water pump 13. This circulation loop is only referred as the second circulation loop in this invention.

In the first circulation loop, the water is pumped out from the No. 2 water pump 12 and heated to heated water with sufficient temperature in the water heater 9. A portion of the thermal energy of the heated water is dissipated to the passenger compartment 8 through a warm air core body to increase the temperature of the passenger compartment 8 for defogging. Another portion of the heated water flows to the water-water heat exchanger 16 to heat the water in the second circulation loop, such that the battery and the central controller 4 are heated to realize heating of the battery.

The above examples are preferred implementations of the present invention, and are only configured to illustrate the present invention for convenience, and are not intended to limit the present invention in any form. The equivalent embodiments made with partial changes or modifications made by anyone with ordinary knowledge in the technical field and if without departing from the scope of the mentioned technical features in the present invention by using the technical content disclosed in the present invention, and without departing from the technical features of the present invention, still fall within the scope of the technical features of the present invention.

## Claims

1. An integrated thermal management device, comprising:
an integrated tank, containing a medium, and equipped with a No. 1 water pump, a No. 2 water pump and a No. 3 water pump for pumping out, pumping in or pressurizing the medium; and
thermal management components, comprising a water-cooled heat exchanger, a water-cooled condenser, a water-water heat exchanger, a five-way valve and a six-way valve which are mounted on a surface of the integrated tank;
the water-cooled heat exchanger, the water-cooled condenser, and the water-water heat exchanger each are connected to the five-way valve and/or the six-way valve via a pipeline, and the thermal management components are connected to the integrated tank via a pipeline; and
the water-cooled heat exchanger is further connected with a liquid refrigerant in an air-conditioning system of vehicle via a pipeline; and the water-cooled condenser is further connected with a gaseous refrigerant in the air-conditioning system of vehicle via a pipeline.

2. The integrated thermal management device according to claim 1, wherein the six-way valve comprises:
a six-way housing, provided with six valve ports evenly arranged along a circumferential direction; and
a six-way core body, including a pair of flow grooves, wherein each flow groove communicates at most three adjacent valve ports with one another, and at most one flow groove in the pair of flow grooves communicates three adjacent valve ports with one another;
the five-way valve comprises:
a five-way housing, provided with five valve ports, respectively being a first valve port, a second valve port, a third valve port, a fourth valve port and a fifth valve port, wherein the second valve port and the fifth valve port are located in a same straight line and arranged symmetrically along a geometric centre of the five-way housing; the first valve port is located on one side of the straight line in which the second valve port and the fifth valve port are located, and the third valve port and the fourth valve port are located on another side of the straight line; and
a five-way core body, including a pair of first communication grooves and a pair of second communication grooves, wherein, each first communication groove communicates at most two adjacent valve ports, and each second communication groove communicates the second valve port and the fourth valve port or communicates the third valve port and the fifth valve port.

3. An integrated thermal management system, mounted on a vehicle with a central controller, an automobile front radiator, a power battery, an electric motor, and a passenger compartment, wherein the passenger compartment is provided with a warm air conditioner, and the integrated thermal management system comprises:
the integrated thermal management device according to claim 1; and
a water heater, mounted in the vehicle;
wherein, the automobile front radiator, the power battery, the electric motor and the warm air conditioner are connected with the thermal management components via a pipeline; and the central controller is in signaling connection with the integrated thermal management device and, adjusts, by regulating the thermal management components of the integrated thermal management device, a flow direction of a medium in the automobile front radiator, the power battery, the electric motor, the warm air conditioner and the thermal management components, to implement a thermal management control on the electric motor, the power battery and the passenger compartment.

4. The integrated thermal management system according to claim 3, wherein the five-way valve is provided with a first valve port, a second valve port, a third valve port, a fourth valve port, and a fifth valve port thereon; and the six-way valve is provided with a No.1 valve port, a No.2 valve port, a No.3 valve port, a No.4 valve port, a No.5 valve port and a No.6 valve port thereon;
a pipeline protruding from the No. 1 valve port is divided into two paths through one three-way valve, one of the two paths flowing through the water-water heat exchanger and then back to the No.3 valve port, another one of the two paths passing through the warm air conditioner, the water heater, the water-cooled condenser, and the No. 2 water pump for the integrated tank in sequence to reach the No.2 valve port;
a pipeline protruding from the No.4 valve port is divided into two paths through one three-way valve, one of the two paths leading to the first valve port, another one of the two paths passing through the automobile front radiator and then leading to the No.6 valve port;
a pipeline protruding from the No.5 valve port passes through the electric motor and the No. 1 water pump in sequence, and then leads to the second valve port;
a pipeline protruding from the fifth valve port passes through the No. 3 water pump and the water-water heat exchanger in sequence, and then passes through one three-way valve to be divided into two paths, one of the two paths passing through the power battery and then being connected to the third valve port, another one of the two paths passing through the central controller and then being connected to the fourth valve port;
the integrated thermal management system activates one or more of a battery heating mode, a heat pump type of electrically driven waste heat recovery mode, a battery heating type of electrically driven waste heat recovery mode, a battery dual cooling mode, an electrically driven cooling mode, a battery forced cooling mode, a battery uniform heating mode, a mode of heating the passenger compartment, a battery natural cooling mode, a filling and exhausting mode, and a mode of defogging combined with battery heating the passenger compartment, by regulating an opening and/or a closing of various valve ports inside the five-way valve and six-way valve to form different medium circulation loops, and by controlling an activation and a de-activation of the No. 1 water pump, the No. 2 water pump, the No. 3 water pump, the water-cooled heat exchanger, the water-cooled condenser, the water-water heat exchanger, the warm air conditioner, the automobile front radiator and the water heater.

5. The integrated thermal management system according to claim 4, wherein, when it is necessary to activate the battery heating mode, the water heater, the No. 2 water pump and the No. 3 water pump are activated, and the medium circulation loop is as follows:
in the six-way valve, the No.5 valve port is in communication with the No.4 valve port, and the No.3 valve port is in communication with the No.2 valve port; and
in the five-way valve, the third valve port, the fourth valve port and the fifth valve port are in communication with one another, and the first valve port is in communication with the second valve port.

6. The integrated thermal management system according to claim 4, wherein when the heat pump type of electrically driven waste heat recovery mode, the battery heating type of electrically driven waste heat recovery mode and the battery dual cooling mode are activated, the medium circulation loop is as follows:
in the six-port valve, the No. 5 valve port leads to the No. 4 valve port and No. 6 valve port, and the No. 1 valve port leads to the No. 2 valve port;
in the five-way valve, the first valve port is in communication with the fifth valve port, and the third valve port and the fourth valve port are in communication with the second valve port;
when it is necessary to activate the heat pump type of electrically driven waste heat recovery mode, the No. 1 water pump, the No. 2 water pump, the No. 3 water pump, the water-cooled heat exchanger, the water-cooled condenser, the automobile front radiator and the warm air conditioner are activated;
when it is necessary to activate the battery heating type of electrically driven waste heat recovery mode, the No. 1 water pump, the No. 3 water pump and the automobile front radiator are activated; and
when it is necessary to activate the battery dual cooling mode, the No. 1 water pump, the No. 3 water pump, the water-cooled heat exchanger, and the automobile front radiator are activated;

7. The integrated thermal management system according to claim 4, wherein when one of the electrically driven cooling mode, the battery forced cooling mode, the battery uniform heating mode and the mode of heating the passenger compartment is activated, the medium circulation loop is as follows:
in the six-way valve, the No. 4 valve port, the No. 6 valve port and the No. 5 valve port are in communication with one another, and the No. 1 valve port is in communication with the No. 2 valve port;
in the five-way valve, the third valve port, the fourth valve port and the fifth valve port are in communication with one another, and wherein the first valve port is in communication with the second valve port;
When it is necessary to activate the electrically driven cooling mode, the No. 1 water pump and the automobile front radiator are activated;
when it is necessary to activate the battery forced cooling mode, the No. 3 water pump, the automobile front radiator and the water-cooled heat exchanger are activated;
When it is necessary to activate the battery uniform heating mode, the No. 2 water pump, the No. 3 water pump, the automobile front radiator, the water-cooled heat exchanger and the water-cooled condenser are activated; and
when the mode of heating the passenger compartment is required, the No. 2 water pump, the water heater and the warm air conditioner are activated.

8. The integrated thermal management system according to claim 4, wherein when the battery natural cooling mode is activated, the No. 3 water pump is in an activated state, and the No. 1 water pump and the No. 2 water pump are in a turned on state or in an un-turned on state, and the medium circulation loop is as follows:
in the six-way valve, the No. 4 valve port, the No. 6 valve port and the No.5 valve port are in communication with one another, and the No.1 valve port is in communication with the No.2 valve port; and
in the five-way valve, the third valve port, the fourth valve port and the fifth valve port are in communication with one another.

9. The integrated thermal management system according to claim 4, wherein when the filling and exhausting mode is activated, the No. 1 water pump, the No. 2 water pump and the No. 3 water pump are activated, and the medium circulation loop is as follows:
in the six-way valve, the No. 4 valve port, the No. 5 valve port and the No. 6 valve port are in communication with one another, and the No. 3 valve port is in communication with the No. 2 valve port; and
in the five-way valve, the second valve port, the third valve port and the fourth valve port are in communication with one another, and the first valve port is in communication with the fifth valve port.

10. The integrated thermal management system according to claim 4, wherein when the mode of defogging combined with battery heating the passenger compartment is activated, the water heater, the warm air conditioner, the No. 2 water pump and the No. 3 water pump are activated, and the medium circulation loop is as follows:
in the six-way valve, the No. 4 valve port, the No. 5 valve port and the No. 6 valve port are in communication with one another, and the No. 3 valve port is in communication with the No. 2 valve port; and
in the five-way valve, the third valve port, the fourth valve port and the fifth valve port are in communication with one another, and the first valve port is in communication with the second valve port.
